# EUROPEAN PATENT SPECIFICATION

(11) **EP 3 112 655 B1**
(45) Date of publication and mention of the grant of the patent: **28.11.2018**
(21) Application number: 16174937.9
(22) Date of filing: 17.06.2016
(51) Int. Cl.: F02M 35/10, F02B 29/04

(54) **INTAKE MANIFOLD**
EINLASSVERTEILER
COLLECTEUR D'ADMISSION

(30) Priority: 30.06.2015 JP 2015130916
(43) Date of publication of application: 04.01.2017
(73) Proprietor: Mitsubishi Jidosha Kogyo K.K., Tokyo 108-8410 (JP)
(72) Inventor: KIMURA, Hiroyuki, Tokyo, 108-8410 (JP); ISOBE, Yusuke, Tokyo, 108-8410 (JP)
(74) Representative: Vossius & Partner Patentanwälte Rechtsanwälte mbB

(56) References cited:
- DE-A1- 19 853 455
- FR-A1- 2 925 663
- FR-A1- 2 946 699
- FR-A1- 2 989 771
- US-A1- 2003 115 871
- US-A1- 2008 149 198
- US-A1- 2012 180 478
- US-A1- 2012 291 762
- US-A1- 2013 042 840
- US-A1- 2014 326 222

## Description

### Technical Field

The present invention relates to an intake manifold that incorporates an intercooler that cools charge or intake air entering an engine.

### Background Art

Conventionally, engines have been developed in which an intercooler is incorporated in an intake manifold for cooling compressed charge (intake air) entering the engine. Namely, in such engines, intake air is cooled immediately before the intake air is induced into an intake manifold of the engine. In the case of a water-cooled intercooler being adopted, an engine coolant, for example, is used as a refrigerant. By adopting a cooling construction like this, refrigerant piping in the intercooler can be shortened and simplified, thereby making it possible to enhance the assembling properties of the engine to a vehicle (refer to JP-A-2014-051907, FR 2 989 771 A1, DE 198 53 455 A1 or US 2014/326222 A1 for example).

### Summary of Invention

### Technical Problem

In case the intercooler is incorporated in the intake manifold, however, a distance between a portion that is cooled as a result of the operation of the intercooler and a portion that is heated as a result of the operation of the engine becomes short, this facilitating the occurrence of thermal contraction and thermal expansion at the respective portions. For example, a flange where the intercooler is fixed to the intake manifold changes when the flange is affected by the temperature of the engine coolant that flows through a core of the intercooler and also changes when the flange is affected by heat radiated to be transmitted thereto by the engine itself. Because of this, there is possibility that the flange is locally cooled or heated, which will possibly generate cracks in the flange, leading to the breakage thereof.

One object of the invention has been conceived in view of the problem described above and is to suppress the reduction in product quality of an intake manifold that incorporates an intercooler due to heat deterioration. The object of the invention is not limited to the object described, and another object of the invention is to provide working effects that will be induced from various configurations that will be described later in a "description of embodiments" and that cannot be attained by the conventional techniques.

### Solution to Problems

(1) An intake manifold incorporating an intercooler that cools intake air entering an engine, is defined according to claim 1.
(2) It is preferable that the top plate has at least one of a recess portion that is provided on a contact surface with the flange so as to be depressed therefrom and a groove portion that is provided on the contact surface so as to be depressed therefrom into a groove shape. It is preferable that the recess portion and the groove portion function to absorb a deformation of the flange that is generated as a result of thermal expansion and thermal contraction of the flange.
(7) It is preferable that the intake manifold includes a gasket that is held between the flange and the top plate.
(8) It is preferable that the top plate has a thickness that is greater than that of the flange.
(9) It is preferable that the intake manifold includes a vacuum pipe that supplies a vacuum that is induced into a turbocharger of the engine or a brake booster.
(10) It is preferable that the top plate incorporates a heater.

### Advantageous Effects of Invention

It is possible to use the top plate that has the rigidity and thickness that can deal with a desired fastening pressure while permitting a slight deformation (thermal distortion) generated as a result of a change in temperature of the flange by providing the top plate separately from the flange. Consequently, it is possible to suppress the generation of cracks near the flange and thereby to enhance product quality while ensuring the fixing strength of the intercooler.

### Brief Description of Drawings

Fig. 1 is a block diagram of an engine to which an intake manifold as an embodiment of the invention is attached.
Fig. 2 is a perspective view of the intake manifold.
Fig. 3 is an exploded perspective view (a partially sectional exploded perspective view taken along a line A-A in Fig. 2) of the intake manifold.
Fig. 4 is a sectional view (a sectional view taken along a line B-B and seen in a direction indicated by arrows in Fig. 2) of the intake manifold.
Fig. 5 is a perspective view showing a rear surface of a top plate.
Fig. 6 is a sectional view (a sectional view taken along a line C-C and seen in a direction indicated by arrows in Figs. 3 and 4) of the intake manifold.
Fig. 7 is a sectional view (a sectional view taken along a line D-D and seen in a direction indicated by arrows in Figs. 3 and 4) of the intake manifold.
Fig. 8 is an enlarged sectional view of an EGR passage portion.
Figs. 9A to 9C are conceptual views showing flows of EGR gas and intake air.

### Description of Embodiments

Referring to the drawings, an intake manifold (an intake manifold) as an embodiment of the invention will be described. The embodiment that will be described below only illustrates an exemplary mode for carrying out the invention, and there is no intention to exclude any possibility that various modifications or techniques that will not be described in the embodiment to be described below are adopted. Various configurations described in the embodiment can be modified without departing from the scope of the invention as defined by the claims. In addition, those configurations can be selected or rejected and can be combined together as required. In the following description, "upstream" and "downstream" mean directions based on flowing directions of a flow of intake air and a flow of exhaust gas.

### [1. Engine]

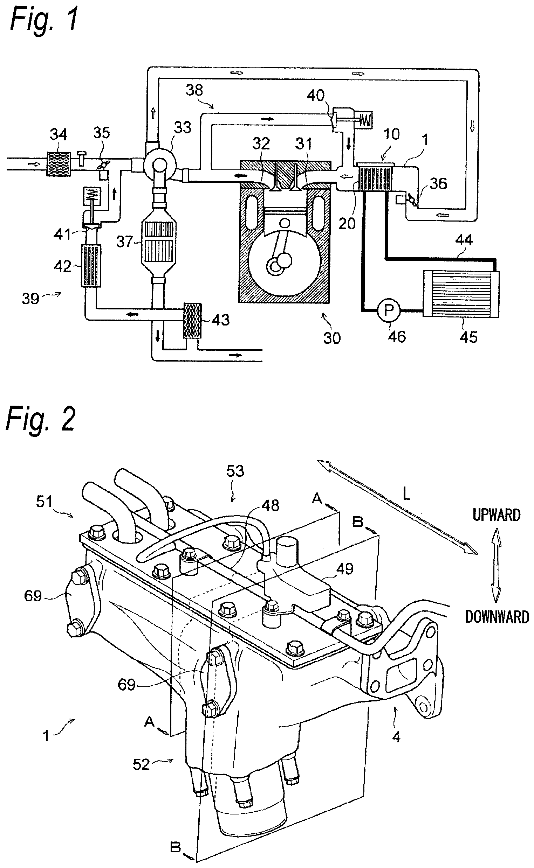

An intake manifold 1 of this embodiment is applied to an engine 30 provided with a dual-loop EGR system shown in Fig. 1. Fig. 1 shows only one of four cylinders that are provided in the engine 30 as an example. This engine 30 is a diesel engine that is run on diesel oil. An intake port 31 and an exhaust port 32 are provided in an interior of a cylinder head that forms a top surface of cylinders, and the intake port 31 and the exhaust port 32 are connected to a corresponding cylinder. Then, an intake valve and an exhaust valve are provided in the intake port and the exhaust port, respectively. An upstream end opening portion of the intake port 31 is opened to the outside of the engine 30 at a side surface of the cylinder head.

The intake manifold 1 that incorporates a water-cooled intercooler 10 (the I/C incorporated intake manifold) is mounted upstream of the upstream end opening portion of the intake port 31. The intake manifold 1 of this embodiment is attached directly to the side surface of the cylinder head so as to cover the upstream end opening portion of the intake port 31. Hereinafter, a direction along which upstream end opening portions of intake ports 31 are aligned on the side surface of the cylinder head will be referred to as a "ports aligned direction L." In the case of a in-line four-cylinder engine, the ports aligned direction L is the same as a direction in which four cylinder is aligned (a cylinders aligned direction) and is parallel to an axis of a crankshaft of the engine 30.

A turbocharger 33 (one type of supercharging equipment) is provided on the engine 30, and this turbocharger 33 operates by making use of an exhaust pressure. In the turbocharger 33, rotational shafts of a turbine and a compressor are connected together via a bearing, and the turbine is interposed in an exhaust system, while the compressor is interposed in an intake system. In the intake system, an air cleaner 34 (a filter), a low-pressure throttle valve 35, the turbocharger 33, and a high-pressure throttle valve 36 are provided sequentially in that order from an upstream side of an intake air flow, and the intake manifold 1 is disposed directly downstream of the high-pressure throttle valve 36. In addition, in the exhaust system, the turbocharger 33 and an exhaust emission control device 37 are provided sequentially in that order from an upstream side of an exhaust gas flow. A diesel oxidation catalyst, a NOx reduction catalyst and a DPF (a diesel particulate filter) are incorporated in the exhaust emission control device 37.

Two EGR passages for recirculating part of exhaust gas to an intake side is provided in the engine 30, and they are a high-pressure EGR passage 38 and a low-pressure EGR passage 39. The high-pressure EGR passage 38 establishes a communication between the intake system and the exhaust system in a position lying closer to the cylinder than the turbocharger 33. On the other hand, the low-pressure EGR passage 39 establishes a communication between a portion of the exhaust system that lies downstream of the turbine of the turbocharger 33 and a portion of the intake system that lies upstream of the compressor of the turbocharger 33. A high pressure EGR valve 40 is interposed in the high-pressure EGR passage 38. A low-pressure EGR valve 41, an EGR cooler 42 and an EGR filter 43 are interposed in the low-pressure EGR passage 39. The high-pressure EGR passage 38 of this embodiment is provided so as to connect an exhaust manifold and the intake manifold 1 of the engine 30 and supplies an EGR gas downstream of the intercooler 10.

The intercooler 10 is a water-cooled cooling device for cooling compressed charge or air (intake air) that enters the engine 30 and is interposed on a cooling circuit 44 through which an engine coolant flows as a refrigerant. This cooling circuit 44 is provided separately from a cooling circuit for cooling the engine 30 and includes a radiator 45 and a pump 46 that are provided exclusively for the intercooler 10. The refrigerant that is cooled at the radiator 45 is supplied to a core 20 off the intercooler 10 by activating the pump 46 to circulate the refrigerant, whereby intake air that passes through an interior of the core 20 is cooled by the refrigerant.

### [2. I/C Incorporated Intake Manifold]

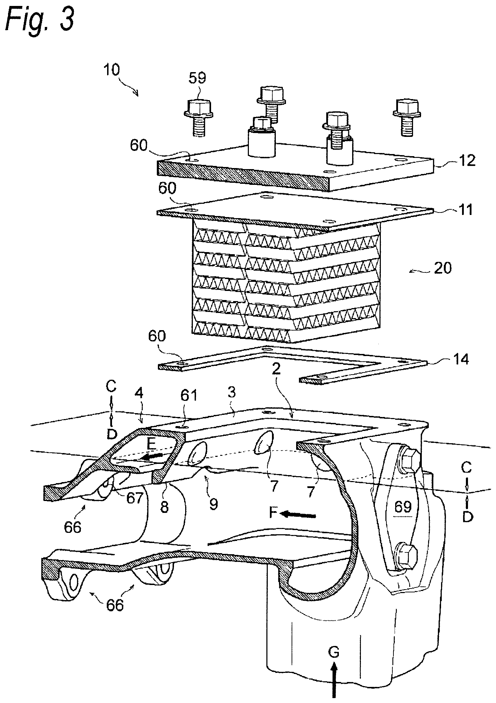

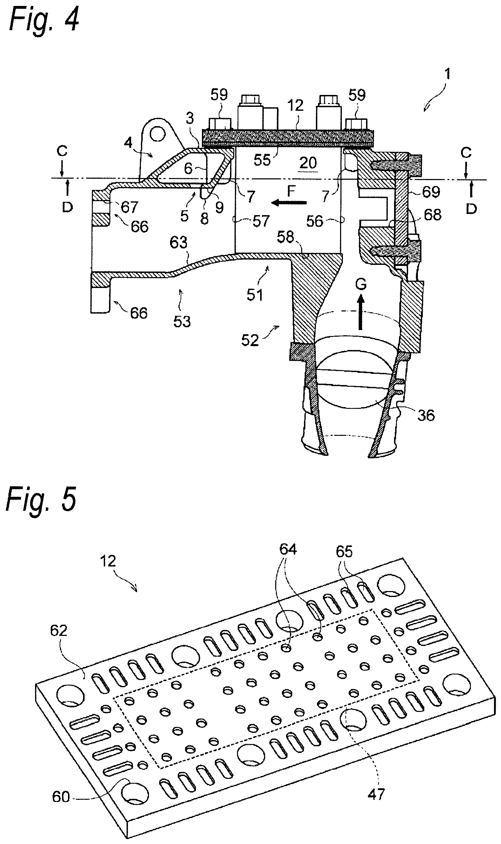

Fig. 2 shows an external shape of the intake manifold 1. Fig. 3 shows a partially sectional exploded perspective view of the intake manifold 1 taken along a plane A-A in Fig. 2. Fig. 4 shows a vertical sectional view of the intake manifold 1 taken along a plane B-B in Fig. 2. An internal construction of the intake manifold 1 is roughly divided into four portions: a central portion 51 where the intercooler 10 is mounted; an upstream portion 52 that lies upstream of the central portion 51; a downstream portion 53 that lies downstream of the central portion 51; and an EGR passage 4 that constitutes a flow path for inducing the EGR gas into the intake system.

The central portion 51 is a box-like portion where the core 20 of the intercooler 10 is accommodated. A substantially rectangular opening portion 2 is opened in an upper surface of the central portion 51 so that the core 20 is inserted through the opening portion 2. A flat edge portion 3 is provided on an outer circumference of the opening portion 2. The core 20 of this embodiment is formed into a rectangular parallelepiped configuration whose dimension along the ports aligned direction L becomes the longest. An upper surface 55 and a lower surface 58 of the core 20 are closed. Two surfaces in the remaining four surfaces that have a greatest area constitute an inlet surface 56 and an outlet surface 57 of intake air. A direction directed from the inlet surface 56 to the outlet surface 57 constitutes a flow direction F of intake air. The flow direction F of intake air is indicated by a thick arrow in each of Figs. 3 and 4. A direction that is normal to the flow direction F in a horizontal plane constitutes a flowing direction of the refrigerant in the interior of the core 20.

The core 20 is mounted so that the lower surface 58 slopes downwards from the inlet surface 56 towards the outlet surface 57. Namely, the core 20 is fixed in an interior of the central portion 51 of the intake manifold 1 so that the inlet surface 56 is oriented slightly upwards relative to the upstream portion 52 and the outlet surface 57 is oriented slightly downwards relative to the downstream portion 53. By adopting this configuration, dew formed in an interior of the intercooler 10 is allowed to move easily from the outlet surface 57 to the downstream portion 53, whereby the occurrence of clogging or breakage of the core 20 triggered by frozen water is suppressed.

The upstream portion 52 deflects a flow of intake air that has passed through the high-pressure throttle valve 36 so that the intake air flow enters the core 20 of the intercooler 10. For example, an intake passage or a throttle body is mounted on the upstream portion 52. A flowing direction G of intake air that enters the upstream portion 52 is set at least non-parallel to the flowing direction F so that the intake air flow does not travel straight towards the inlet surface 56 of the core 20. As shown in Fig. 3, the upstream portion 52 of this embodiment is constructed so as to allow intake air to flow from below to above the intercooler 10.

The EGR passage portion 4 is a tubular portion that supplies the EGR gas to a downstream side of the intercooler 10. When looking at the intake manifold 1 from thereabove, this EGR passage portion 4 is provided so as to extend in a direction that intersects the flowing direction F. In this embodiment, the direction in which the EGR passage portion 4 extends is set parallel to the ports aligned direction L. By adopting this configuration, a flowing direction E of the EGR gas that flows through an interior of the EGR passage portion 4 becomes substantially normal to the flowing direction F of intake air as shown in Fig. 3.

The downstream portion 53 is a portion where intake air that flows out from the outlet surface 57 of the core 20 and the EGR gas are mixed together for supply to the intake ports 31. As shown in Fig. 4, a bottom surface 63 of the downstream portion 53 is formed so as to slope slightly downwards from the outlet surface 57 of the core 20. A mixture of intake air and EGR gas flows into the intake ports 31 while spreading in the ports aligned direction L in the downstream portion 53 and is then induced into interiors of the cylinders according to open conditions of the intake valves of the engine 30. The number of upstream end opening portions of the intake ports 31 that are opened in the side surface of the cylinder head is plural. Consequently, the downstream portion 53 may branch into sub-portions in such a way as to match the number and positions of the upstream end opening portions of the inlet ports 31.

Additionally, fixing portions 66 are provided on the downstream portion 53 for fixedly fastening the intake manifold 1 to the cylinder head of the engine 30. Threaded holes 67 into which fastening and fixing devices are screwed are formed in the fixing portions 66. Threaded holes similar to the threaded holes 67 are also formed in the side surface of the cylinder head to which the fastening and fixing devices are fastened. The threaded holes are provided in a row separately at an upper portion and a lower portion of the side surface of the cylinder head that lie above and below the upstream end opening portions of the intake ports 31. The fixing portions 66 on the intake manifold 1 are provided in a row separately at an upper portion and a lower portion of the downstream portion 53 in such a way as to hold an outlet portion of intake air therebetween.

As shown in Fig. 3, of the fixing portions 66 that are disposed in the upper and lower rows, the fixing portions 66 in the lower row are disposed on an outer side of the downstream portion 53 (that is, on an outer side of the intake manifold 1). In contrast with this, the fixing portions 66 in the upper row are disposed in the interior of the downstream portion 53 through which intake air flows. The fixing portions 66 in the upper row are set to be situated at portions lying between the cylinders of the engine 30. In this embodiment, the fixing portions 66 are situated between a first cylinder and a second cylinder and between a third cylinder and a fourth cylinder.

A working opening portion 68 is provided in the upstream portion 52 for attaching the fastening and fixing devices to the fixing portions 66. As shown in Fig. 4, the working opening portion 68 is set to be situated in a position where a perpendicular is extended to a fixing plane from the fixing portions 66. It is noted that the intake manifold 1 is fastened and fixed to the cylinder head before the intercooler 10 is mounted. Thereafter, the working opening portion 68 is closed with a lid member 69 as shown in Fig. 2.

### [2-1. Intercooler]

The construction of the intercooler 10 will be described in detail. As shown in Fig. 3, the intercooler 10 includes a flange 11 that is brazed to the upper surface 55 of the core 20 and a top plate 12 that is provided separately from the flange 11. The flange 11 is a metallic plate that is greater in size than the upper surface 55 of the core 20 and is sized so that when the core 20 is inserted through the opening portion 2 into the intake manifold 1, the flange 11 is brought into contact with an external surface of the edge portion 3 of the opening portion 2 to be fixed thereto. The flange 11 is fixed flush to the external surface of the edge portion 3. The flange 11 is attached to the upper surface 55 of the core 20 so as to extend flat over the upper surface 55 and protrude outwards from the upper surface 55. Holes 60 are opened in an outer circumferential portion of the flange 11 so that fastening and fixing devices 59 such as bolts or long screws pass therethrough. The flange 11 can be cooled by the refrigerant that flows through the interior of the core 20.

The top plate 12 is a metallic plate that has almost the same size as that of the flange 11 and a thickness thicker than that of the flange 11. Holes 60 are also opened in an outer circumferential portion of the top plate 12 so that the fastening and fixing devices 59 pass therethrough. Additionally, threaded holes 61 are also provided in the edge portion 3 of the opening portion 2 in positions corresponding to the holes 60 so that the fastening and fixing devices 59 are fixed in the threaded holes 61. Then, the fastening and fixing devices 59 are passed through the holes 60 in the flange 11 and the top plate 12 so as to be screwed into the threaded holes 61. This enables the opening portion 2 to be closed by the flange 11 and the top plate 12, and the flange 11 is fixed to the external surface of the edge portion 3, while the intercooler 10 is fixed to the intake manifold 1. In this embodiment, the intercooler 10 is installed in the intake manifold 1 with a metallic gasket 14 held between the flange 11 and the edge portion 3 of the opening portion 2. Since the gasket 14 is so mounted by being fastened by the top plate 12 whose thickness is thicker than that of the flange 11 via the flange 11, it is possible to enhance the sealing surface contact pressure of the gasket 14. The thickness of the top plate 12 can be set according to the fixing strength or fastening pressure of the intercooler 10.

When looking at the opening portion 2 from the front (in the direction in which the core 20 is inserted through the opening portion 2), the top plate 12 of this embodiment is formed to such a size that the top plate 12 overlaps the EGR passage portion 4. Namely, the top plate 12 is sized so that one side of the top plate 12 covers partially the EGR passage portion 4. To describe this configuration the other way round, the EGR passage portion 4 is disposed so as to pass directly underneath the top plate 12. This will also be true with the flange 11. When looking at the intercooler 10 from thereabove, the flange 11 is formed to such a size that the flange 11 overlaps the EGR passage portion 4. The edge portion 3 of the opening portion 2 of this embodiment functions as part of a wall member that makes up the EGR passage portion 4. By adopting this configuration, the EGR gas flowing through an interior of the EGR passage portion 4 is cooled by the core 20 of the intercooler 10 via the flange 11 and the top plate 12.

An upper surface of the top plate 12 is formed into a flat surface, and a vacuum pipe 48 and a solenoid valve 49 are mounted on the upper surface of the top plate 12. The vacuum pipe 48 constitutes a supply path for a vacuum that is induced into an actuator of the turbocharger 33 and a master bag of a brake booster. The solenoid valve 49 is an electromagnetic opening and closing valve that is interposed along the length of the vacuum supply path. A vacuum pump for drawing air is provided at one end of the vacuum pipe 48, while the turbocharger 33 and the brake booster are connected to the other end of the vacuum pipe 48. The turbocharger 33 has a function to drive a variable nozzle of a turbine by making use of a difference in pressure between the exhaust side and the intake side, to thereby change a boost pressure. The brake booster has a function to boost brake pedal effort by making use of a vacuum. In this way, air within the vacuum supply path can be cooled indirectly by mounting the vacuum pipe 48 and the solenoid valve 49 on the surface of the top plate 12, and the control of the turbocharger 33 and the brake booster can be improved without involvement of any additional cost.

A heating member 47 functioning as a heater is laid out in an interior of the top plate 12. The heating member 47 is, for example, a nichrome wire or a Peltier device that is supplied with electric power to generate heat. The heating member 47 is energized when the engine 30 is started, for example, in an extremely cold environment to heat the flange 11 and the core 20 of the intercooler 10. This prevents the flange 11 from being cooled excessively at the time of a cold start and the core 20 from being clogged or broken due to frozen water.

As shown in Fig. 5, in surfaces of the top plate 12, recess portions 64 and groove portions 65 are provided on a rear surface 62 constituting a contact surface with the flange 11. The recess portions 64 are depressed from their peripheral surrounding areas and the groove portions 65 are depressed into a groove-like configuration. The groove portions 65 are such that a depression continues in a straight line for a certain length. These recess portions 64 and the groove portions 65 are constructed so as to reduce a frictional resistance between the flange 11 and the top plate 12 while ensuring a fastening pressure therebetween and hence function to absorb a deformation of the flange 11 that would result from a thermal expansion or thermal contraction of the flange 11. The recess portions 64 are provided mainly near a central portion of the top plate 12, and the groove portions 65 are disposed on an outer periphery of the recess portions 64. The groove portions 65 are arranged so that they extend from the central portion towards an outer periphery of the top plate 12. In this way, by providing the recess portions 64 and the groove portions 65 on the surface of the top plate 12, a slight deformation (a heat distortion) of the flange 11 resulting from a change in temperature thereof is permitted, thereby reducing a risk of cracks being generated in the flange 11, which would lead to the breakage of the flange 11. Specific configurations and arrangements of the recess portions 64 and the groove portions 65 should be set appropriately according to the distribution of internal stress associated with the change in temperature of the flange 11.

### [2-2. EGR Passage Portion]

The construction of the EGR passage portion 4 will be described in detail. As shown in Fig. 3, the EGR passage portion 4 is provided adjacent to the opening portion 2 and is disposed so as to extend along an internal surface of the edge portion 3. Namely, the EGR passage portion 4 is disposed adjacent to the core 20 of the intercooler 10. The EGR passage portion 4 extends at right angles to the intake air flowing direction F. By adopting this configuration, a flowing direction E of EGR gas in an interior of the EGR passage portion 4 becomes perpendicular to the intake air flowing direction F and becomes substantially parallel to the outlet surface 57 of the core 20. Consequently, when looking at the EGR passage portion 4 from thereabove, EGR gas can be induced uniformly along a width direction relative to a flow of intake air that flows out from the outlet surface 57 of the core 20, thereby enhancing the mixture of intake air with EGR gas.

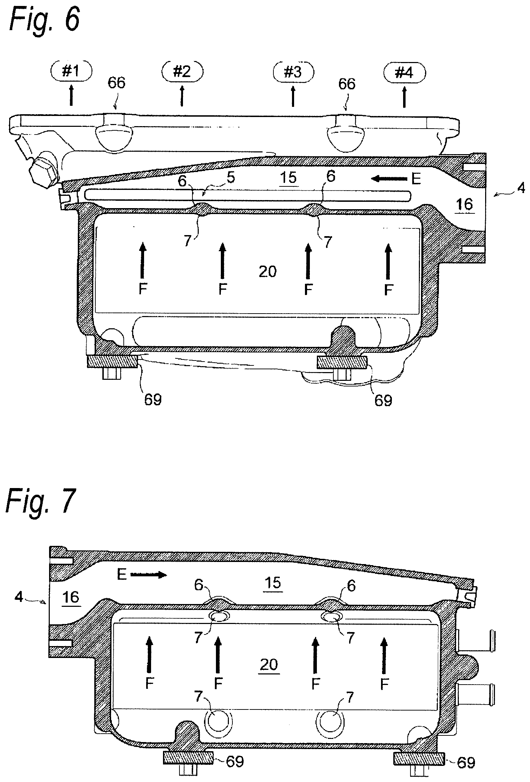

Figs. 6 and 7 illustrate horizontally sectional configurations of the EGR passage portion 4. The EGR passage portion 4 includes an extending portion 15 and a deflecting portion 16. The extending portion 15 extends in a straight line in a direction perpendicular to the intake air flowing direction F. In a horizontally sectional configuration of the extending portion 15, the extending portion 15 is formed so that its flow path gets narrower as the extending portion 15 extends deeper into the EGR passage portion 4. A slit 5 (an EGR opening portion) is provided in the extending portion 15 so as to allow EGR gas to flow downstream of the core 20. The slit 5 is made up of a thin elongated opening portion that extends along the EGR gas flowing direction E and is disposed closer to an upstream of the intake air flowing direction F in an interior of the extending portion 15 (that is, in a position lying nearer to the core 20).

The deflecting portion 16 is disposed at an entrance of EGR gas that flows into the EGR passage portion 4 and has a function to deflect a flow of EGR gas to a direction that intersects the extending direction of the extending portion 15 (that is, the EGR gas flowing direction E). A flow path of the deflecting portion 16 is shaped so as to be bent in a crank-like fashion (in other words, into an S-shaped curve) in such a way as to avoid the slit 5 when seen from thereabove, as shown in Figs. 6 and 7. In this embodiment, the slit 5 is disposed closer to the upstream of the intake air flowing direction F, and the flow path of deflecting portion 16 is shaped so that EGR gas is induced towards a position lying closer to a downstream of the intake air flowing direction F (a position lying farther away from the core 20). By adopting this configuration, EGR gas tends to be deflected so as to flow along a side opposite to a side where the slit 5 is provided in the interior of the extending portion 15, this thereby making it easy for EGR gas to flow deeper into the extending portion 15.

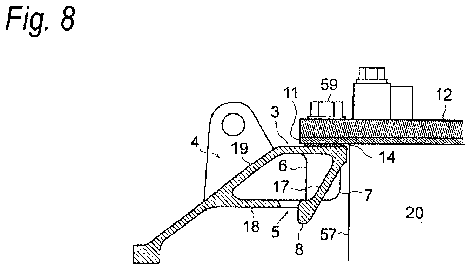

The EGR passage portion 4 has a trapezoidal sectional shape as shown in Fig. 8, in which the edge portion 3 of the opening portion 2 constitutes an upper bottom of the trapezoidal shape. Namely, it can be said that the EGR passage portion 4 has the trapezoidal cross section that is formed by the edge portion 3, a first wall surface 17, a second wall surface 18 and a third wall surface 19.

The first wall surface 17 is inclined so as to move away from the core 20 as it moves downwards from the opening portion 2. Intake air that passes an internal portion of the core 20 that lies near the opening portion 2 can strike the first wall surface 17. Then, the intake air so striking the first wall surface 17 flows obliquely downwards along a surface of the first wall surface 17.

The second wall surface 18 corresponds to a lower bottom of the trapezoidal cross section and is formed so as to follow the intake air flowing direction F. The slit 5 is formed in the second wall surface 18.

The third wall surface 19 corresponds to an inclined side of the trapezoidal cross section and is disposed downstream of the first wall surface 17 in the intake air flowing direction F so as to face the first wall surface 17.

First protuberant portions 6 are provided so as to protrude in the interior of the extending portion 15, and the first protuberant portions 6 generate turbulence in a flow of EGR gas along the slit 5. The first protuberant portions 6 are made up of portions of tubular bosses that reinforce radially peripheries of the threaded holes 61 where the fastening and fixing devices 59 are fixed in place to install the intercooler 10 in the central portion 51. Portions of these bosses that protrude outwards of the EGR passage portion 4 are referred to as second protuberant portions 7. The second protuberant portions 7 function to generate turbulence in a flow of intake air. As shown in Fig. 8, the first protuberant portions 6 and the second protuberant portions 7 are disposed so as to correspond to the positions where the fastening and fixing devices 59 are attached. The fastening and fixing devices 59 are disposed so as to surround the opening portion 2 and hence are provided not only on a downstream side but also on an upstream side of the core 20. As shown in Fig. 3, the bosses that are disposed on the upstream side of the core 20 are also referred to as second protuberant portions 7.

As shown in Fig. 8, a separating portion 8 is provided on the second wall surface 18 so as to protrude downwards therefrom in a position lying upstream of the slit 5 in the intake air flowing direction F. The separating portion 8 functions to separate an intake air flow from the second wall surface 18. For example, the separating portion 8 acts to cause an intake air flow that flows in along a surface of the first wall surface 17 to continue to flow straight obliquely downwards without being deflected. The separating portion 8 has at least a cross-sectional shape that protrudes from the second wall surface 18 towards an inside of an intake air passage. It is preferable that the separating portion 8 is shaped to have a slope that continues to extend from the first wall surface 17. By adopting this configuration, a pressure near the slit 5 that lies downstream of the separating portion 8 is reduced slightly, making it easy for EGR gas within the EGR passage portion 4 to be sucked downwards through the slit 5. Additionally, a swirl of intake air tends to be generated near the slit 5, enhancing the mixture of EGR gas and intake air.

As shown in Fig. 3, the separating portion 8 extends in the EGR gas flowing direction E along an edge of the slit 5. Namely, the separating portion 8 extends in the direction that intersects the intake air flowing direction F (in a perpendicular direction in this embodiment). When seen from thereabove, the separating portion 8 is formed so as to extend almost a full width of an area where intake air flows. However, the tool for attaching the fastening and fixing devices is inserted in a range from the working opening portion 68 to the fixing portions 66 that correspond thereto, and therefore, a recess portion 9 is provided on the separating portion 8 so as to prevent an interference of the tool with the separating portion 8. Namely, as shown in Fig. 3, the recess portion 9 is formed by extending a perpendicular from the fixing portions 66 disposed in the interior of the downstream portion 53 to a fixing plane and partially reducing a projecting dimension of the separating portion 8 from the second wall surface 18 so as to prevent an interference between the perpendicular and the separating portion 8. By adopting this configuration, turbulence is easy to be generated in an intake air flow, and the mixture of EGR gas and intake air is enhanced.

### [3. Functions]

### [3-1. Intercooler]

The flange 11 of the intercooler 10 that is incorporated in the intake manifold 1 described above tends to be cooled easily by the refrigerant that flows through the core 20 and is cooled down to a relatively low temperature. On the other hand, since this intake manifold 1 is attached to the cylinder head of the engine 30, the intake manifold 1 is easily affected by heat generated by the engine 30, and hence, the portion of the flange 11 that lies near the cylinder head is heated to a relatively high temperature. Then, a local thermal expansion or thermal contraction is generated in the interior of the flange 11 by the thermal imbalance, which generates an environment where cracks are generated in the flange 11, leading to the breakage thereof. In particular, in the intake manifold 1 described above, since the EGR passage portion 4 is disposed adjacent to the core 20 of the intercooler 10, the flange 11 that is disposed directly above the EGR passage portion 4 tends to be heated to a high temperature, and this easily generates a local thermal expansion.

To cope with this problem, in the intake manifold 1 described above, as shown in Fig. 3, the top plate 12 of the intercooler 10 is provided separately from the flange 11 that is brazed to the core 20, and the top plate 12 and the flange 11 are fixedly fastened on to the opening portion 2 with the top plate 12 and the flange 11 kept superposed on each other. This permits easily the flange 11 to be deformed and move relative to the top plate 12 even though the temperature of the flange 11 is lowered or raised locally.

In addition, as shown in Fig. 5, the recess portions 64 and the groove portions 65 are depressed on the rear surface 62 of the top plate 12. These recess portions 64 and groove portions 65 function to absorb the deformation of the flange 11 that is triggered by the thermal expansion or thermal contraction thereof. Consequently, the relative deformation and movement of the flange 11 to the top plate 12 is permitted in a more ensured fashion. Additionally, the frictional resistance is reduced without reducing excessively the fastening pressure under which the flange 11 and the top plate 12 are fastened together, and therefore, the fixing strength of the intercooler 10 is also ensured.

The top plate 12 is formed so as to overlap the EGR passage portion 4 when seen from thereabove. Namely, EGR gas that flows through the interior of the EGR passage portion 4 is cooled by the intercooler 10 via the top plate 12. This serves to reduce the volume of the EGR gas more, and the volume efficiency of the EGR gas is improved. In addition, since the combustion temperature of the engine 30 is reduced, the generation of NOx is reduced.

### [3-2. EGR Passage Portion]

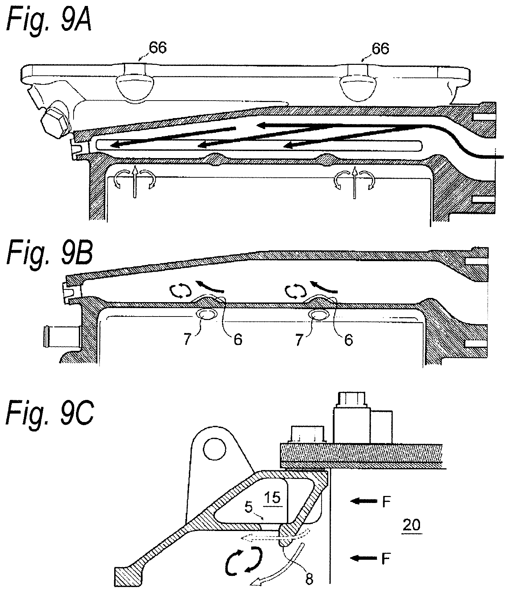

In the EGR passage portion 4 provided in the intake manifold 1 described above, as shown in Fig. 6, the extending portion 15 where EGR gas is allowed to flow straight and a deflecting portion 16 where EGR gas is allowed to flow curvilinearly are provided. The deflecting portion 16 has the function to deflect a flow of EGR gas towards the side of the EGR passage portion 4 where the slit 5 is not formed. The third wall surface 19 is provided so as to approach the first wall surface 17 that the third wall surface 19 faces as the third wall surface 19 extends deeper into the extending portion 15 from the deflecting portion 16, whereby the flow path of EGR gas is formed so as to become narrower as the flow path extends deeper into the EGR passage portion 4 (the extending portion 15). By adopting this configuration, as shown in Fig. 9A, EGR gas is allowed to easily reach a deepest portion of the extending portion 15, so that EGR gas is allowed to flow out uniformly from all portions of the slit 5. Consequently, the mixture of EGR gas and intake air is improved.

The first protuberant portions 6 are provided on the inner side of the extending portion 15 so as to generate turbulence in a flow of EGR gas. For example, as shown in Fig. 9B, when EGR gas flows by the first protuberant portions 6, eddy turbulence is generated in EGR gas flowing downstream of the first protuberant portions 6. This causes the flow of EGR gas containing such turbulence to pass the slit 5, whereby the mixture of EGR gas and intake air is improved. In this embodiment, a point where the flow path of the extending portion 15 starts to be narrowed is formed on the third wall surface 19 that faces the first wall surface 17 in a position lying between the first protuberant portions 6 that are provided on the first wall surface 17.

The separating portion 8 is provided upstream of the slit 5 in the intake air flowing direction F. By adopting this configuration, as indicated by a white arrow in Fig. 9C, a flow of intake air that flows along the surface of the first wall surface 17 is separated from the second wall surface 18, whereby EGR gas within the EGR passage portion 4 is easily sucked out downwards from the slit 5, and eddy turbulence is generated downstream of the separating portion 8 in the intake air flowing direction F. This allows the flow of intake air containing such turbulence to mix with EGR gas, whereby the mixture of EGR gas and intake air is improved.

In addition, as shown in Fig. 3, the recess portion 9 is provided on the separating portion 8, and this recess portion 9 protrudes less from the second wall surface 18 than the periphery thereof. Namely, as indicated by a white broken line arrow in Fig. 9C, part of a flow of intake air that flows along the surface of the first wall surface 17 flows along the second wall surface 18 (that is, towards the intake air flowing direction F). On the other hand, this flow of intake air is interrupted at the other portions where the recess portion 9 is not provided. By adopting this configuration, as indicated by white arrows in Fig. 9A, eddy turbulence is generated on either side of the recess portion 9, whereby the mixture of EGR gas and intake air is improved.

### [4. Advantages]

(1) It is possible to use the top plate 12 having the rigidity and thickness that match the desired fastening pressure while permitting the slight deformation (heat distortion) that is triggered by the change in temperature of the flange 11 by fixing the intercooler 10 to the intake manifold 1 by using the top plate 12 provided separately from the flange 11. Consequently, it is possible to avoid the occurrence of an incident where cracks are generated in the flange 11, leading to the breakage thereof while ensuring the fixing strength of the intercooler 10, thereby making it possible to improve the product quality without involvement of excessive cost.
(2) It is possible to allow the flange 11 to easily be deformed and move relative to the top plate 12 by providing the recess portions 64 and the groove portions 65 on the top plate 12, thereby making it possible to absorb efficiently the deformation of the flange 11 that is triggered by the thermal expansion and thermal contraction of the flange 11. Additionally, it is possible to reduce the frictional resistance without reducing excessively the fastening pressure under which the flange 11 and the top plate 12 are fastened together, thereby making it possible to ensure the fixing strength of the intercooler 10 in a more ensured fashion.
(3) It is possible to cool EGR gas flowing through the interior of the EGR passage portion 4 with the intercooler 10 by disposing the EGR passage portion 4 in the position lying adjacent to the core 20 of the intercooler 10, thereby making it possible to simplify the configuration of the cooling system.
(4) It is possible to cool the edge portion 3 that is part of the wall members of the EGR passage portion 4 with the top plate 12 by setting the positional relationship between the EGR passage portion 4 and the top plate 12 so that the EGR passage portion 4 and the top plate 12 overlap when looking at the opening portion 2 from the front (the inserting direction of the core 20), thereby making it possible to enhance the cooling performance of the intercooler 10 to cool EGR gas.
(5) It is possible to generate turbulence in the flow of EGR gas flowing through the interior of the EGR passage portion 4 by providing the first protuberant portions 6 in the interior of the extending portion 15, thereby making to possible to enhance the mixture of EGR gas and intake air. These first protuberant portions 6 are the bosses that reinforce radially the peripheries of the threaded holes 61 with which the intercooler 10 is attached to the intake manifold 1. It is possible to enhance the mixing and cooling capabilities of the intercooler 10 by giving the function to generate a turbulent flow to the existing bosses, thereby making it possible to reduce the fabrication cost.
(6) As shown in Fig. 3, it is possible to generate turbulence in a flow of intake air by providing the second protuberant portions 7 in the intake passage, thereby making it possible to enhance the mixture of EGR gas and intake air. As in the case of the first protuberant portions 6, it is possible to enhance the mixture of EGR gas and intake air by realizing the second protuberant portions 7 by making use of the existing bosses, thereby making it possible to reduce the fabrication cost.
(7) As shown in Fig. 3, it is possible to make the fastening force with which the intercooler 10 is fastened to the intake manifold 1 uniform by fixedly fastening the intercooler 10 to the intake manifold 1 via the gasket 14, thereby making it possible to enhance the sealing capability to seal the opening portion 2. Additionally, compared with a case where a resin seal member, for example, is used, it is possible to permit easily the relative deformation or relative movement of the flange 11 to the edge portion 3 , thereby making it possible to enhance the absorbing capability to absorb heat distortion.
(8) It is possible to disperse uniformly the fastening pressure by making use of the top plate 12 having the thickness greater than that of the flange 11, thereby making it possible to absorb a deformation of the flange 11 that is triggered by the heat expansion or heat contraction thereof. Additionally, since the fastening pressure is made difficult to vary, it is possible to fix the intercooler 10 in a more ensured fashion, thereby making it possible to improve the product quality without involvement of excessive cost. Further, it is possible to enhance the seal surface contact pressure of the gasket 14 by fastening the gasket 14 by using the top plate 12 having the thickness greater than that of the flange 11.
(9) It is possible to cool air within the vacuum pipe 48 by providing the vacuum pipe 48 on the top plate 12 as shown in Fig. 2. By adopting this configuration, it is possible to make stable the operating conditions of the device (the actuator of the turbocharger 33 or the master bag of the brake booster) to which the vacuum pipe 48 is connected. Additionally, since the volume of air in the vacuum pipe 48 is reduced, there is a merit that a vacuum by which the turbocharger 33 or the brake booster is activated (a pressure reduction amount) can be reduced.
(10) The heating member 47 functioning as the heater is incorporated in the top plate 12. This can prevent the core 20 from being clogged or broken by frozen water. It is possible to increase or decrease the cooling efficiency of the core 20 by controlling the heat value of the heating member 47, thereby making it possible to enhance the controllability of the intercooler 10. Although the cooling efficiency of the intercooler 10 can be changed by controlling the flow speed and flow rate of the refrigerant that flows through the core 20, the cooling efficiency of the core 20 can be changed more quickly by employing the heating member 47 as well, thereby making it possible to enhance the controllability of the intercooler 10.

### [5. Modified Examples]

In the embodiment that has been described heretofore, the intake manifold 1 that is mounted on the engine 30, which is the diesel engine. However, the application of the invention is not limited to the diesel engine 30. The EGR system of the engine 30, in a non-claimed alternative configuration, can be omitted as required. The mounting angle of the intake manifold 1 based on the engine 30 can be set arbitrarily. In the embodiment that has been described heretofore, the core 20 of the intercooler 10 is provided so that the lower surface 58 of the core 20 is inclined relative to the horizontal plane. However, the invention is not limited thereto, and hence, the intake manifold 1 itself may be inclined relative to the horizontal plane, or the engine 30 may be inclined relative to the horizontal plane.

### Reference Signs List

1 intake manifold
2 opening portion
3 edge portion
4 EGR passage portion (EGR passage)
5 slit (EGR opening portion)
6 first protuberant portion
7 second protuberant portion
8 separating portion
9 recess portion
10 intercooler
11 flange
12 top plate
14 gasket
15 extending portion
16 deflecting portion
20 core
47 heat generating member (heater)
48 vacuum pipe
64 recess portion
65 groove portion

## Claims

1. An intake manifold (1) incorporating an intercooler (10) configured to cool intake air entering an engine (30), wherein the intake manifold comprises:
an opening portion (2) through which a core (20) of the intercooler (10) is inserted thereinto;
a flat shaped flange (11) that extends from an end face of the core (20) that is inserted into the intake manifold (1) through the opening portion (2), and that is attached to an external surface of an edge portion (3) of the opening portion;
a top plate (12) that is formed separately from the flange (11) and that fixes the flange (11) to the external surface of the edge portion (3);
an EGR passage (4) that is disposed along an internal surface of the edge portion (3) in a position that lies adjacent to the core (20) so as to constitute a flow path for an EGR gas that returns from an exhaust system to an intake system of the engine (30);
a first protuberant portion (6) that protrudes towards an inside of the EGR passage (4) so as to generate turbulence in the flow of EGR gas;
a second protuberant portion (7) that protrudes towards an inside of an intake passage through which the intake air flows so as to generate turbulence in the flow of intake air, and
a fixing member (59) that fixes the top plate (12) and the flange (11) to the intake manifold,
wherein the top plate (12) has a shape that overlaps the EGR passage (4) when seen from an inserting direction of the core (20),
the top plate (12) is disposed so as to partially cover the EGR passage (4),
the intake manifold (1) is **characterized in that**:
a wall surface (17) of a wall disposed between the EGR passage (4) and an intake passage in a center portion (51) of the intake manifold (1) is inclined with respect to an insertion direction of the fixing member (59),
the wall surface (17) includes a cylindrical boss formed around a hole into which the fixing member (59) is inserted, and the first and second protuberant portions (6, 7) are parts of the cylindrical boss.

2. The intake manifold according to Claim 1, wherein
the top plate has at least one of a recess portion that is provided on a contact surface with the flange so as to be depressed therefrom and a groove portion that is provided on the contact surface so as to be depressed therefrom into a groove shape.

3. The intake manifold according to Claim 1 or 2, further comprising:
a gasket that is held between the flange and the top plate.

4. The intake manifold according to any one of Claims 1 to 3, wherein
the top plate has a thickness that is greater than that of the flange.

5. The intake manifold according to any one of Claims 1 to 4, comprising:
a vacuum pipe that is fixed to the top plate and that supplies a vacuum that is induced into a turbocharger of the engine or a brake booster.

6. The intake manifold according to any one of Claims 1 to 5, wherein
the top plate incorporates a heater.

## Patentansprüche

1. Ansaugkrümmer (1) mit eingebautem Ladeluftkühler (10), der so konfiguriert ist, dass er in einen Motor (30) eintretende Ansaugluft kühlt, wobei der Ansaugkrümmer aufweist:
einen Öffnungsabschnitt (2), durch den ein Kern (20) des Ladeluftkühlers (10) darin eingeführt ist;
einen Flachformflansch (11), der sich von einer Endfläche des Kerns (20), der in den Ansaugkrümmer (1) eingeführt ist, durch den Öffnungsabschnitt (2) erstreckt und der an einer Außenfläche eines Kantenabschnitts (3) des Öffnungsabschnitts angebracht ist;
eine Kopfplatte (12), die getrennt vom Flansch (11) ausgebildet ist und die den Flansch (11) an der Außenfläche des Kantenabschnitts (3) befestigt;
einen AGR-Kanal (4), der entlang einer Innenfläche des Kantenabschnitts (3) in einer Position angeordnet ist, die benachbart zum Kern (20) liegt, um einen Durchflussweg für ein AGR-Gas zu bilden, das von einer Abgasanlage zu einer Ansauganlage des Motors (30) zurückkehrt;
einen ersten Vorsprungabschnitt (6), der zu einer Innenseite des AGR-Kanals (4) vorsteht, um Turbulenz im Durchfluss von AGR-Gas zu erzeugen;
einen zweiten Vorsprungabschnitt (7), der zu einer Innenseite eines Ansaugkanals vorsteht, durch den die Ansaugluft fließt, um Turbulenz im Durchfluss von Ansaugluft zu erzeugen, und
ein Befestigungsteil (59), das die Kopfplatte (12) und den Flansch (11) am Ansaugkrümmer befestigt,
wobei die Kopfplatte (12) eine Form hat, die den AGR-Kanal (4) mit Blick aus einer Einführrichtung des Kerns (20) überdeckt,
die Kopfplatte (12) so angeordnet ist, dass sie den AGR-Kanal (4) teilweise abdeckt,
der Ansaugkrümmer (1) **dadurch gekennzeichnet ist, dass**:
eine Wandfläche (17) einer Wand, die zwischen dem AGR-Kanal (4) und einem Ansaugkanal in einem Mittelabschnitt (51) des Ansaugkrümmers (1) angeordnet ist, im Hinblick auf eine Einführrichtung des Befestigungsteils (59) geneigt ist,
die Wandfläche (17) eine zylindrische Bosse aufweist, die um ein Loch gebildet ist, in das das Befestigungsteil (59) eingeführt ist, und der erste und zweite Vorsprungabschnitt (6, 7) Bestandteile der zylindrischen Bosse sind.

2. Ansaugkrümmer nach Anspruch 1, wobei
die Kopfplatte einen Aussparungsabschnitt, der auf einer Kontaktfläche mit dem Flansch so vorgesehen ist, dass er davon vertieft ist, und/oder einen Nutabschnitt hat, der auf der Kontaktfläche so vorgesehen ist, dass er davon in Nutenform vertieft ist.

3. Ansaugkrümmer nach Anspruch 1 oder 2, der ferner aufweist:
eine Dichtung, die zwischen dem Flansch und der Kopfplatte gehalten wird.

4. Ansaugkrümmer nach einem der Ansprüche 1 bis 3, wobei
die Kopfplatte eine größere Dicke als der Flansch hat.

5. Ansaugkrümmer nach einem der Ansprüche 1 bis 4, der aufweist:
ein Unterdruckrohr, das an der Kopfplatte befestigt ist und das einen Unterdruck zuführt, der in einen Turbolader des Motors oder einen Bremskraftverstärker induziert wird.

6. Ansaugkrümmer nach einem der Ansprüche 1 bis 5, wobei
in der Kopfplatte eine Heizung eingebaut ist.

## Revendications

1. Collecteur d'admission (1) intégrant un refroidisseur intermédiaire (10) configuré pour refroidir l'air d'admission entrant dans un moteur (30), dans lequel le collecteur d'admission comprend :
une portion d'ouverture (2) à travers laquelle un noyau (20) du refroidisseur intermédiaire (10) est inséré dedans ;
une bride de forme plate (11) qui s'étend à partir d'une face d'extrémité du noyau (20), qui est inséré dans le collecteur d'admission (1) à travers la portion d'ouverture (2), et qui est fixé à une surface externe d'une portion de bord (3) de la portion d'ouverture ;
une plaque supérieure (12) qui est formée séparément de la bride (11) et qui fixe la bride (11) à la surface externe de la portion de bord (3) ;
un passage EGR (4) qui est disposé le long d'une surface interne de la portion de bord (3) dans une position qui se trouve adjacente au noyau (20) de façon à constituer un chemin d'écoulement pour un gaz EGR qui revient d'un système d'échappement à un système d'admission du moteur (30) ;
une première portion protubérante (6) qui fait saillie vers un intérieur du passage EGR (4) de façon à générer une turbulence dans l'écoulement de gaz EGR ;
une deuxième portion protubérante (7) qui fait saillie vers un intérieur d'un passage d'admission à travers lequel l'air d'admission s'écoule de façon à générer une turbulence dans l'écoulement d'air d'admission, et
un élément de fixation (59) qui fixe la plaque supérieure (12) et la bride (11) au collecteur d'admission,
dans lequel la plaque supérieure (12) a une forme qui chevauche le passage EGR (4) lorsque vu d'une direction d'insertion du noyau (20),
la plaque supérieure (12) est disposée de façon à couvrir partiellement le passage EGR (4),
le collecteur d'admission (1) est **caractérisé en ce que** :
une surface de paroi (17) d'une paroi disposée entre le passage EGR (4) et un passage d'admission dans une portion centrale (51) du collecteur d'admission (1) est inclinée par rapport à une direction d'insertion de l'élément de fixation (59),
la surface de paroi (17) comprend un bossage cylindrique formé autour d'un trou dans lequel l'élément de fixation (59) est inséré, et les première et deuxième portions protubérantes (6, 7) sont des parties du bossage cylindrique.

2. Collecteur d'admission selon la revendication 1, dans lequel
la plaque supérieure a au moins une d'une portion d'évidement qui est prévue sur une surface de contact avec la bride de façon à être enfoncée de là et une portion de rainure qui est prévue sur la surface de contact de façon à être enfoncée de là dans une forme de rainure.

3. Collecteur d'admission selon la revendication 1 ou 2, comprenant en outre :
un joint d'étanchéité qui est retenu entre la bride et la plaque supérieure.

4. Collecteur d'admission selon l'une quelconque des revendications 1 à 3, dans lequel
la plaque supérieure a une épaisseur qui est supérieure à celle de la bride.

5. Collecteur d'admission selon l'une quelconque des revendications 1 à 4, comprenant :
un tuyau sous vide qui est fixé à la plaque supérieure et qui fournit un vide qui est induit dans un turbocompresseur du moteur ou un servofrein.

6. Collecteur d'admission selon l'une quelconque des revendications 1 à 5, dans lequel
la plaque supérieure intègre un dispositif de chauffage.
